# EUROPEAN PATENT SPECIFICATION

(11) **EP 4 623 261 B1**
(45) Date of publication and mention of the grant of the patent: **04.11.2026**
(21) Application number: 23817311.6
(22) Date of filing: 24.11.2023
(51) Int. Cl.: F28D 20/00, C01B 32/50, H02J 3/28, H02J 15/50

(54) **ELECTRIC ENERGY STORAGE DEVICE**
ELEKTRISCHE ENERGIESPEICHERVORRICHTUNG
DISPOSITIF DE STOCKAGE D'ÉNERGIE ÉLECTRIQUE

(30) Priority: 25.11.2022 SE 2251376
(43) Date of publication of application: 01.10.2025
(73) Proprietor: Texel Energy AB, 411 15 Göteborg (SE)
(72) Inventor: JACOBSSON, Lars, 411 15 Göteborg (SE)
(74) Representative: Zacco Sweden AB
(86) International application number: PCT/EP2023/083078
(87) International publication number: WO 2024/110663

(56) References cited:
- EP-A1- 2 557 372
- EP-A2- 2 955 372
- EP-B1- 3 172 413
- WO-A1-2014/062464
- WO-A1-2021/119752
- WO-A1-2022/015232
- CN-A- 114 719 238
- DE-A1- 102014 101 987
- DE-A1- 102016 119 668
- DE-A1- 102020 129 902
- GB-A- 1 287 690
- US-A1- 2022 170 386
- US-B1- 10 443 954
- US-B1- 11 740 031

## Description

### TECHNICAL FIELD

The present invention relates to a device and system for storing renewable electric energy. The storage device comprises a metal oxide/carbonate and the energy is stored in chemical bonds in a porous solid and/or liquid state and is converted to thermal energy when the carbon dioxide gas CO₂ is released from the CO₂ storage to react with the metal oxide. CO₂ is released from the stored state to react with the metal oxide through a highly exothermic reaction.

### BACKGROUND ART

As renewable energy is increasing at a rapid pace, more systems for generating electricity from wind or solar are developed and installed. Wind power plants generate electric energy through a rotating generator. Some solar power systems use photovoltaic cells to produce electricity directly, which may be converted to e.g. an appropriate alternating current for a grid system. Other solar power systems use mirrors to concentrate the radiation to a focus point in which a heat driven generator is positioned. The heat driven generator may be a Stirling engine, or in larger power plants, a steam turbine.

A disadvantage with the energy produced through renewable technologies is that the produced energy is instantaneous and that it is very expensive to store the energy in rechargeable battery cells. The cost for such a system is thus very high, and the system is often combined with a fuel-based generator in order to produce electricity when the wind is not blowing or the sun is not shining.

It is also known to store energy as heat in different heat storing devices that may use e.g. melted material or phase-change material. The energy may be stored at low temperature or high temperature. Low temperature storage may e.g. include large water tanks that store hot water for heating purposes from summer to winter in isolated containers. High temperature storage may e.g. comprise salt compounds, sulphur, aluminium or graphite. With a high temperature storage, the heat may be used e.g. to power a thermal cycle such as a Stirling engine where both heat and electricity can be obtained.

DE 102014002761 A1 discloses an energy system adapted to store renewable energy from e.g. solar panels or wind turbines. The energy system comprises a thermochemical storage and can produce electricity through a sterling motor and a generator. The system can also deliver heat for heating purposes. The described system uses magnesium hydride to store and release energy.

The disclosure of document WO 2022/015232A represents the closest prior art. These system may work in some cases, but there is still room for improvements.

### DISCLOSURE OF INVENTION

An object of the invention is therefore to provide a device for storing electric energy. A further object of the invention is to provide a system for storing electric energy, and for producing heat in a controlled manner from the stored energy. A further object of the invention is to provide a method for storing electric energy.

The solution to the problem according to the invention is described in the appended claims for a device, a system and a method. The other claims contain advantageous embodiments and further developments of the device, the system and the method.

In a device for storing electric energy, comprising a heat reaction chamber, an energy storage, and a heat exchanger adapted to be heated by the heat reaction chamber, where the heat reaction chamber comprises a metal carbonate material mixed with a susceptor material and a metal coil, where the energy storage comprises a pressurized tank or a porous solid material, and where a valve is arranged between the heat reaction chamber and the energy storage, the object of the invention is achieved in that the device comprises an alternating current source connected to the metal coil and adapted to output an alternating current to the metal coil, where the metal coil acting as an antenna is adapted to generate and transmit an electromagnetic field to the susceptor material in the heat reaction chamber, such that the metal carbonate material is heated to release a carbon dioxide gas.

In some example embodiments, the alternating current source may be deemed to represent an electromagnetic source adapted to output an alternating electromagnetic field to the metal coil, wherein the metal coil transmits the electromagnetic field to the susceptor material in the heat reaction chamber.

By this first embodiment of the energy storing device according to the invention, an electric energy storage device that is adapted to store renewable electric energy is provided. The renewable electric energy is used to heat a metal carbonate material positioned in the heat reaction chamber to a temperature between 800 to 900 °C. The heating of the metal carbonate material is performed by generating and transmitting an electromagnetic field via the metal coil to the susceptor material, which will absorb the energy with a concomitant increase in temperature.

The metal coil is configured to generate an alternating electromagnetic field from the alternating current flowing in the metal coil. The alternating electromagnetic field heats the susceptor material by generating an induced current in the susceptor material, also referred to as eddy current. The eddy currents flow through the resistance of the susceptor material and heats the susceptor material by Joule heating and/or magnetic hysteresis losses.

The metal coil will act as a generator and transmitter antenna for the electromagnetic field. The susceptor material is heated and will in turn heat the metal carbonate material which will release a carbon dioxide gas, leaving a metal oxide in the heat reaction chamber. By controlling the amount of radiated electromagnetic field, the amount of released carbon dioxide gas can be controlled. The metal coil may be a single coil or may be several coils arranged in series or in parallel. The pipe of the metal coil may be hollow to allow for a flow of heat transfer liquid through the coil.

The heating of the susceptor material and metal carbonate material with the electromagnetic field in the heat reaction chamber will cause a release of carbon dioxide gas from the metal carbonate material in a endothermic reaction, i.e. a reaction that absorbs heat from the surroundings.

The electromagnetic field radiated by the metal coil generates the desired heat that gives the metal carbonate material the desired temperature for carbon dioxide release at a desired pressure, where the valve is actuated to allow a flow of carbon dioxide gas to the energy storage. By controlling the amount of electromagnetic field generated and transmitted by the metal coil, the amount of released carbon dioxide gas from the metal carbonate material and the pressure in the heat reaction chamber is controlled.

The pressure of the gas that is released from the metal carbonate material depends partly on the temperature in the heat reaction chamber, but may be from 1- 5 bars. When the carbon dioxide gas is stored in a porous solid material, this pressure is enough for the gas to pass into the energy storage through a valve to be physisorbed onto the porous solid material. When the carbon dioxide gas is stored in a pressurized gas tank in the energy storage, the carbon dioxide gas is compressed to 45-65 bar at ambient temperature through a compressor arranged between the heat reaction chamber and the energy storage. At this pressure, the carbon dioxide gas will be liquefied and will be stored as a liquid. The energy storage vessel is closed off from the atmosphere.

When the amount of electric energy that is to be stored has been used to heat the heat reaction chamber, or when the metal carbonate material is depleted of carbon dioxide, the heating process is stopped. The temperature in the heat reaction chamber will slowly decrease and/or be transferred by the CO₂ into a sand bed or lost as radiative heat, depending on the amount of insulation material used to insulate the heat reaction chamber. In some systems, the energy transfer process is used regularly, e.g. every night. In this case, it could be advantageous to hold the temperature in the heat reaction chamber at a constant high temperature. At the same time, the temperature in the energy storage will decrease to a temperature around room or ambient temperature, e.g. around 15 - 25 degrees Celsius. The pressure in the energy storage will decrease to a low pressure of around 1 bar when all the carbon dioxide gas is absorbed on a porous solid material, or maintained at 45-65 bar when stored as a liquid.

After a predefined time, or when heating energy is required, the recovery of energy is started. In order to release the carbon dioxide gas from the energy storage, a valve is opened, changing the pressure in the vessel and causing the CO₂ to start flowing to the heat reaction chamber, reacting with the metal oxide to release the heat from the reaction. The heat exchanger is in one example the metal coil through which a fluid is circulated. It is also possible to provide the heat reaction chamber with other types of fluid tubes that act as a heat exchanger, e.g. a plurality of straight tubes interposed in the metal carbonate material. The tubes may e.g. be arranged between the metal coil and the outer side of the heat reaction chamber, and may be used as a heat exchanger together with the metal coil in parallel.

Consequently, the present disclosure relates to a device for storing electric energy in form of thermal energy. This is sometimes referred to as a thermal energy storage (TES). The present disclosure describes a thermochemical heat storage (TCS) that involves some kind of reversible exothermic/endothermic chemical reaction of the heat storage media.

### BRIEF DESCRIPTION OF DRAWINGS

The invention will be described in greater detail in the following, with reference to the embodiments that are shown in the attached drawings, in which
- Fig. 1: shows a first example of a device for storing electric energy according to the invention,
- Fig. 2: shows a second example of a device for storing electric energy according to the invention, and
- Fig. 3: shows an example of a system for storing renewable electric energy according to the invention.

### MODES FOR CARRYING OUT THE INVENTION

The embodiments of the invention with further developments described in the following are to be regarded only as examples and are in no way to limit the scope of the protection provided by the patent claims.

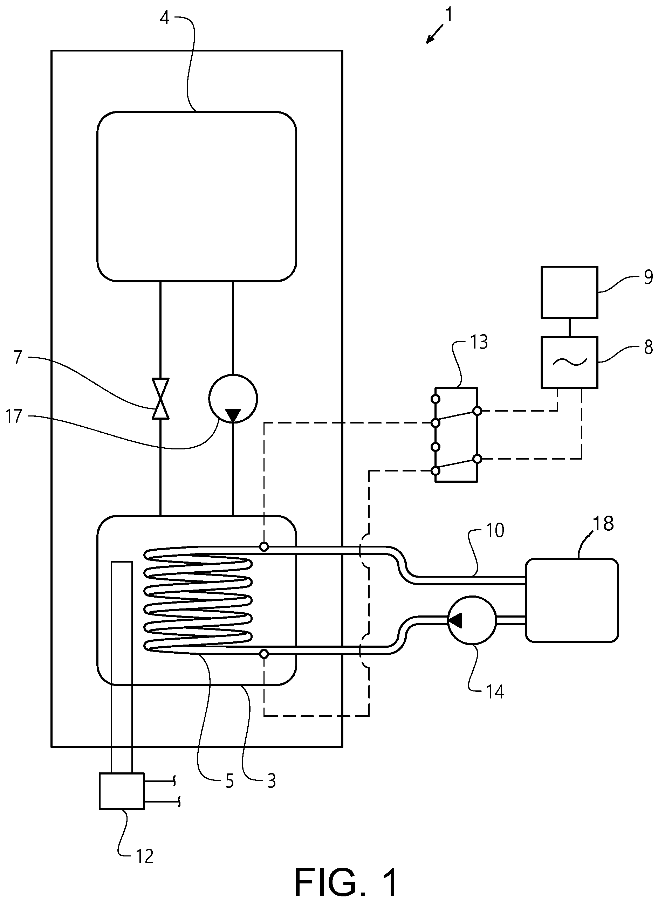

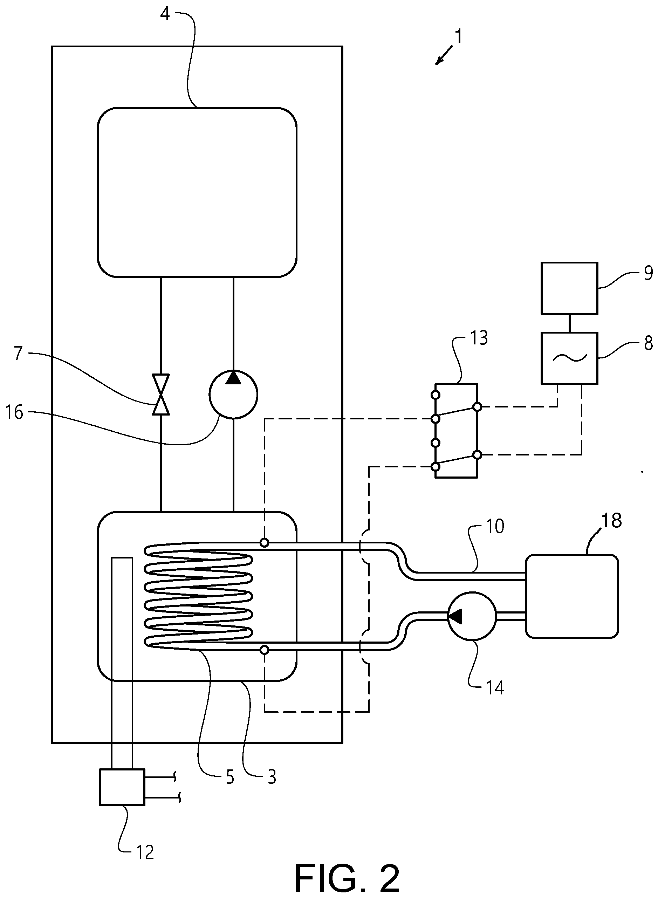

Figs. 1 and 2 show examples of a device 1 for storing electric energy according to the invention. The device 1 is adapted to convert heat to storable energy and to convert the storable energy back to heat. The device is provided with a heat reaction chamber 3 that is heated with an electromagnetic field such that a carbon dioxide gas (CO₂) is released from the heat reaction chamber, and an energy storage 4 where the carbon dioxide gas is either stored in a pressurized state as a liquid or absorbed in a porous solid material. Energy is recovered by returning carbon dioxide gas back to the heat reaction chamber, where the carbon dioxide gas reacts with the metal oxide material in a highly exothermic reaction, and where the heat is transferred to the surroundings through a heat exchanger. By the energy storage device, renewable electric energy can be stored in an efficient way. The renewable electric energy is used to heat a metal carbonate material positioned in the heat reaction chamber to a temperature between 800 to 900 °C. The heating of the metal carbonate material is performed by generating and transmitting an electromagnetic field by a metal coil 5 in the heat reaction chamber to the susceptor material, which will absorb the energy and will heat to greater than 800 °C. The metal coil will act as a generator and transmitter antenna for the electromagnetic field. The susceptor material will be heated and will in turn heat the metal carbonate material which will release a carbon dioxide gas. By controlling the amount of radiated electromagnetic field, the amount of released carbon dioxide gas can be controlled.

The heat reaction chamber 3 comprises a metal carbonate material mixed with a susceptor material. Both the metal carbonate material and the susceptor material may be a powder or a pressed powder to densify and increase thermal transport. The metal carbonate material and/or the susceptor material may alternatively be formed as pellets, balls or spherical objects.

In the example shown, the metal carbonate material is a calcium carbonate or limestone, CaCO₃. The calcium carbonate will release carbon dioxide CO₂ when heated, and calcium oxide or quicklime CaO will remain in the heat reaction chamber. Other metal carbonate materials that may be used in the heat reaction chamber includes materials comprising a metal such as e.g. sodium (Na), lithium (Li), magnesium (Mg), titanium (Ti), calcium (Ca), aluminium (Al), iron (Fe), strontium (Sr) or barium(Ba), depending on e.g. the highest allowed temperature to be used. Since the metal carbonate material is a nonconductive carbonate, it is mixed with a susceptor material comprising Cobalt (Co), Nickel (Ni), Iron (Fe), Silicon Carbide (SiC) or Carbon (C) or a combination thereof. Such a material will act as a susceptor material that can be heated with an electromagnetic field. The susceptor material will heat the metal carbonate material such that the metal carbonate material will release carbon dioxide upon satisfying the binding energy in the chemical bonds between the carbon dioxide and the metal carbonate material.

In one embodiment of the system, a metal coil 5 is embedded in the mixture of metal carbonate material and susceptor material. The metal coil is used as a transmitter antenna for generating and transmitting an electromagnetic field in the heat reaction chamber. The alternating current is fed from an alternating current source 8 controlled by an electronic control unit (ECU) 9. Input to the alternating current source 8 is the electric energy that is to be stored in the energy storage device. The electromagnetic field will heat the susceptor material in the heat reaction chamber and the susceptor material will in turn heat the metal carbonate material.

In some example embodiments, the alternating current source 8 may for example be the electric grid having a utility frequency of about 50 - 60 Hz. However, in some implementations, this frequency is too low for accomplishing the required heating effect within the heat reaction chamber **3. In** such cases, the alternating current source 8 may be an inverter or a frequency converter, and the alternating current provided by the AC-source 8 may have a frequency in the kHz-range.

The electrical power supplied from the alternating current source 8 to the metal coil 5 may be selected suitable for each specific implementation, and may for example be within 5 - 250 kW, specifically within 50 - 150 kW.

In some example embodiments, the energy storage device may include an electrical switch 13 that is connected to the alternating current source 8 and to the metal coil 5, wherein the electrical switch 13 controls connection and disconnection of the alternating current source 8 with the metal coil. Operation of the electrical switch 13 may be controlled by the ECU 9.

The metal coil 5 is in the shown example a hollow coil comprised in a fluid circuit 10. A heat transfer liquid can be circulated through the first fluid circuit by a pump 14 and can in one example be used to stabilize the temperature in the heat reaction chamber during the heating of the heat reaction chamber.

The metal pipe of the metal coil may for example be made of stainless steel, copper, titanium, Inconel.

The metal pipe may for example have a diameter of about 25 - 75 mm, specifically about 35 - 65 mm. The metal coil 5 may for example have an outer diameter of about 15 - 60 cm. The heat reaction chamber 3 may for example have a cylindrical form with an interior diameter of about 40 - 100 cm. The heat storage device according to the disclosure may however have other dimensions and is not limited to the dimensions described above.

In some example embodiments, the metal coil 5 is located within the heat reaction chamber 3, such that the metal coil 5 becomes embedded in the mixture of metal carbonate material and susceptor material when filled.

The fluid circuit 10 can be connected to a fluid arrangement 18 having more parts. For example, the fluid arrangement 18 can include a reservoir or tank for holding an amount of the heat transfer liquid.

The heat transfer liquid may for example be a mixture of water and glycol. The water may preferably be low-conductivity type of water, such as distilled water or deionized water. Alternatively, the heat transfer liquid may an oil-based liquid or a sodium-based liquid, or the like.

The fluid arrangement 18 can further include liquid heating device and/or a liquid cooling device. A liquid heating device may for example be an electrical heater powered by the renewable electric energy, or the like. Alternatively, the liquid heating device may be a furnace configured to use fossil or renewable fuel as energy source. Still more alternatively, the liquid heating device may be configured to heat the liquid based on waste energy of another process. A liquid cooling device may for example be a dry air cooler that uses ambient forced air cooling, or an industrial cooling tower that uses water cooling, or the like.

The fluid arrangement 18 can further include a deionizer filter to keep the liquid conductivity at a low level, for avoiding problems with electrolysis, etc.

Operation of the fluid arrangement 18 and the pump 14 may be controlled by the ECU 9.

The fluid circuit 10 can in some example process situations be used for heating of the metal carbonate material, either in combination with the electromagnetic heating of the metal coil 5, or separately.

Furthermore, the fluid circuit 10 can in some other example process situations be used for cooling the metal carbonate material.

The ECU may receive input information about various process parameters of the heat storage device, for example from one or more sensors. The one or more sensors may for example provide information indicative of the temperature within the heat reaction chamber 3, temperature distribution within the heat reaction chamber 3, temperature of the metal coil 5, pressure level within the heat reaction chamber 3 and/or the energy storage 4, temperature within the energy storage 4, temperature distribution within the energy storage 4, or temperature and/or flow rate of the heat transfer liquid in the fluid circuit 10.

The ECU may be configured to control the AC source 8, the fluid arrangement 18 and/or the pump 14, and optionally also other parts, such as the valve 7, the compressor 16, 17, the switch 13 or the heat exchanger 12, based on information about one or more process parameters of the heat storage device 1 received from sensors or the like. This corresponds to a feedback controller.

In some example embodiments, for example when the energy storage device should be charged with more energy, the ECU may be configured to control each of the AC source 8, the fluid arrangement 18 and the pump 14 in combination, while having one or more of the following process inputs as process input variables: temperature profile over time, predetermined temperature, min/max temperature levels, temperature time derivative.

The fluid circuit can also be used for cooling the metal pipe of the metal coil 5 if required.

The temperature in the heat reaction chamber is controlled by the ECU 9 such that the alternating current source 8 transmits the required AC power to the metal coil 5 for the release of carbon dioxide gas. The ECU receives input signals form e.g. a control system and various sensors, such as temperature sensors, pressure sensors, etc. The amount of released carbon dioxide gas is partly dependent on the temperature in the heat reaction chamber and on the pressure in the energy storage. The temperature in the heat reaction chamber is controlled such that the temperature is held on a desired level and such that the gas flow to the energy storage is in line with the gas absorption in the energy storage.

The electromagnetic field radiated by the metal coil generates the desired heat that gives the metal carbonate material the desired temperature for carbon dioxide release at a desired pressure, where the valve 7 is actuated by the ECU 9 to allow the flow of carbon dioxide gas to the porous solid material in the energy storage. When the carbon dioxide gas is stored in a pressurized state, a compressor 16 is actuated by the ECU to transfer the carbon dioxide gas to the energy storage. By controlling the amount of electromagnetic field generated and transmitted by the metal coil, the amount of released carbon dioxide gas from the metal carbonate material and the pressure in the heat reaction chamber is controlled.

The released gas from the heat reaction chamber flows to the energy storage 4 through a valve 7 controlled by the ECU. The carbon dioxide may be stored either in a porous solid material or as a liquid gas.

In a first example, shown in Fig. 1, the carbon dioxide gas is stored in a porous solid material. In this case, the valve 7 is opened and the carbon dioxide gas flows into the energy storage from the heat reaction chamber. Normally, the storage pressure in the energy storage is around 1 bar for a system in an idle state. The energy storage is filled with a low enthalpy porous solid material. When the released carbon dioxide gas enters the energy storage, the carbon dioxide gas is physisorbed by the low enthalpy porous solid material. The pressure of the carbon dioxide gas that is released from the metal carbonate material depends partly of the temperature in the heat reaction chamber, and may be from 1-5 bars. The carbon dioxide gas stored in the porous material in the energy storage is released by creating a low pressure in the energy storage vessel. A slight vacuum of e.g. around 0.1 - 0.05 bar will allow the carbon dioxide gas CO₂ to release from the porous material. The low pressure is in this example created by a compressor or vacuum pump 17, that will also provide the required pressure for the carbon dioxide to enter the heat reaction chamber. In the energy storage, the gas is physisorbed by the low enthalpy porous solid material.

In a second example, shown in Fig. 2, the carbon dioxide gas is stored in a liquid state. In this example, a compressor 16 is arranged downstream of the heat reaction chamber 3 and upstream of the energy storage 4 and will move the carbon dioxide gas from the heat reaction chamber to the energy storage when the heat reaction chamber is heated. The carbon dioxide gas will release from the high enthalpy carbonate material when the heat reaction chamber is heated. The pressure in the heat reaction chamber may be between 1-5 bars when the heat reaction chamber is heated to around 900 °C, depending on the used metal carbonate material. In order to obtain an economical system and to reduce the volume of the energy storage vessel, the carbon dioxide gas can be stored under a higher pressure in the energy storage. A pressure of between 45 to 65 bars or more is suitable, depending on the temperature. In one example, the temperature of the energy storage is 20 °C and the pressure is 65 bars. At this condition, the carbon dioxide liquefies and is stored as a liquid, which reduces the volume of the energy storage vessel further.

The pressure relief valve 7 is arranged downstream of the energy storage 4 and upstream of the heat reaction chamber, and will control the release pressure of the carbon dioxide gas flowing into the heat reaction chamber from the energy storage. The valve is completely closed when CO₂ is stored in the energy storage. In order to provide an efficient regeneration of heat when reintroducing the carbon dioxide gas into the heat reaction chamber, a gas pressure of around 10 bars may be required. The pressure relief valve 7 will control the return pressure of the carbon dioxide gas. The electronic control unit 9 is used to control the compressor and the pressure relief valve. The device may also comprise various sensors for the monitoring and control of the device.

When the energy storage is provided with a low enthalpy porous solid material, the rate of the carbon dioxide gas absorption in the low enthalpy porous solid material can be controlled by a slight variation in pressure.

When the amount of electric energy that is to be stored has been used to heat the heat reaction chamber, or when the metal carbonate material is depleted of carbon dioxide, the heating process is stopped. The temperature in the heat reaction chamber will slowly decrease, depending on the amount of insulation material used to insulate the heat reaction chamber. In some systems, the energy transfer process is used regularly, e.g. every night. In this case, it is of advantage to hold the temperature in the heat reaction chamber at a constant high temperature. At the same time, the temperature in the energy storage will be maintained at a temperature around room or ambient temperature, e.g. around 15 - 25 degrees Celsius.

After a predefined time, or when heating energy is required, the recovery of energy is started. In order to release the carbon dioxide gas from the low enthalpy porous solid material, the pressure in the energy storage is changed by opening a valve and releasing the CO₂. The release pressure and flow of carbon dioxide gas from the energy storage is controlled by the valve 7. It would also be possible to use a pump to transfer carbon dioxide gas from the energy storage if a higher pressure is desired when the carbon dioxide gas is stored in a porous solid material. When the carbon dioxide gas is stored as a liquid, the release gas is controlled by the valve.

The flow of carbon dioxide gas and the reaction of carbon dioxide gas with the metal oxide material causes an exothermic release of energy, thus delivering heat to a heat exchanger 12 that heats a fluid that can be used e.g. for residential heating.

The heat exchanger 12 is in one example the metal coil 5 through which a heat transfer liquid can be circulated. In other words, in one example embodiment, the metal coil 5 of the heat reaction chamber 3 is used also for extracting heat, provided from the exothermic release of energy, from the heat reaction chamber 3 to an external user. It is also possible to provide the heat reaction chamber 3 with other types of fluid tubes that act as a heat exchanger 12, e.g. a plurality of straight tubes interposed in the metal carbonate material. The tubes may e.g. be arranged between the metal coil 5 and the outer side of the heat reaction chamber 3, and may be used as a heat exchanger 12 together with the metal coil 5 in parallel, or separately.

The heat exchanger 5, 12 may be a part of a stirling engine that is used for converting thermal energy delivered by the heat storage device 1 to kinematic energy, which for example may be used for driving an electrical generator for providing electrical energy.

In an ideal energy storing device that is empty or fully discharged, the heat reaction chamber will comprise a metal carbonate saturated with carbon dioxide. When the device is fully loaded, the reaction chamber will comprise a metal oxide with no bonded carbon dioxide, and the energy storage will contain the carbon dioxide. In an actual device, this is not the case, but a load degree of 70-90% when compared to a theoretical value is possible to obtain, depending e.g. on the selected metal carbonate and the used temperatures.

The advantage of using an electromagnetic field to heat the heat reaction chamber is that it is a simple and efficient way to heat the heat reaction chamber in an even and distributed manner, where the complete heat reaction chamber is heated at the same time. Additionally, the susceptor material acts as a thermal conductivity enhancer; increasing the effective thermal conductivity of the material inside the heat reaction chamber. With normal resistance heating, the heat transfer in the heat reaction chamber is dependent on the heat conductivity of the metal carbonate material, which is relatively low.

The carbonate material of the heat reaction chamber 3 is a high enthalpy carbonate material and the porous solid material of the energy storage 4 is a low enthalpy porous solid material. In other words, the carbonate material of the heat reaction chamber 3 and porous solid material of the energy storage 4 are different types of materials.

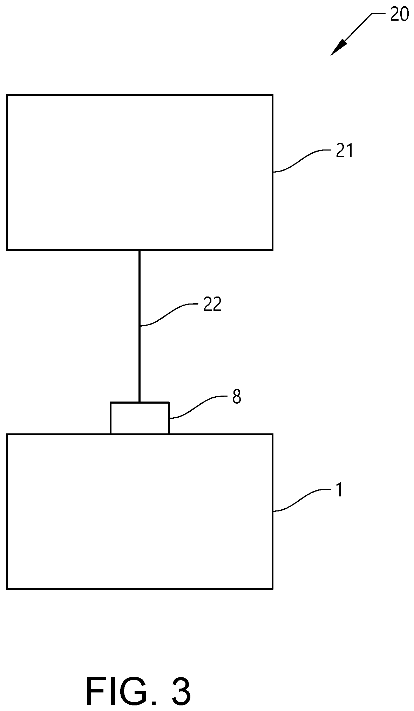

In a system 20 for storing renewable electric energy, shown in Fig. 3, a renewable electric energy source 21 and an energy storage device 1 are comprised. The renewable electric energy source may be either a photovoltaic power plant that produces electric energy when the sun is shining or a wind power plant that produces electric energy when the wind is blowing. The electric energy is transferred from the renewable electric energy source to the AC source 8 of the energy storage device through an inlet power cable 22.

The invention is not to be regarded as being limited to the embodiments described above, a number of additional variants and modifications being possible within the scope of the subsequent patent claims. The thermal storage device may e.g. have any size and shape.

### REFERENCE SIGNS

- 1:: Electric energy storage device
- 3:: Heat reaction chamber
- 4:: Energy storage
- 5:: Metal coil
- 7:: Valve
- 8:: Electromagnetic source
- 9:: Electronic control unit
- 10:: Fluid circuit
- 12:: Heat exchanger
- 13:: Electrical switch
- 14:: Pump
- 16:: Compressor
- 17:: Compressor
- 18:: Fluid arrangement

- 20:: System
- 21:: Renewable power plant
- 22:: Inlet cable

## Claims

1. Device (1) for storing electric energy, comprising a heat reaction chamber (3), an energy storage (4), and a heat exchanger (12) adapted to be heated by the heat reaction chamber (3), where the heat reaction chamber (3) comprises a metal carbonate mixed with a susceptor material and a metal coil (5), where the energy storage (4) comprises a pressurized gas tank or a porous solid material, and where a valve (7) is arranged between the heat reaction chamber (3) and the energy storage (4), wherein the device comprises an alternating current source (8) connected to the metal coil (5) and adapted to output an alternating current to the metal coil (5), **characterized in that** the metal coil (5) acting as an antenna is adapted to generate and transmit an electromagnetic field to the susceptor material in the heat reaction chamber (3), such that the metal carbonate is heated to release a carbon dioxide gas.

2. Device according to claim 1, wherein the heat reaction chamber (3) is adapted to hold a temperature between 800 to 900 degrees Celsius when the heat reaction chamber (3) is heated by the electromagnetic field.

3. Device according to any of claims 1 to 2, wherein the metal carbonate is CaCO₃.

4. Device according to any of claims 1 to 3, wherein the susceptor material in the heat reaction chamber (3) comprises Co, Ni, Fe, SiC or C or a combination thereof.

5. Device according to any of claims 1 to 4, wherein the porous solid material in the energy storage (4) comprises activated carbon, zeolite or a metal organic framework.

6. Device according to any of claims 1 to 5, wherein the metal coil (5) is hollow and adapted to convey a heat transfer fluid.

7. Device according to any of claims 1 to 6, wherein the heat reaction chamber (3) is fluidly connected with the energy storage (4) via a valve (7), wherein the valve (7) is configured to control the flow of released gas from the heat reaction chamber (3) to the energy storage (4).

8. Device according to any of claims 1 to 7, wherein the energy storage (4) is fluidly connected with the heat reaction chamber (3) via a compressor or vacuum pump (17), wherein the compressor or vacuum pump (17) is configured to cause release of carbon dioxide gas stored in the porous material in the energy storage (4) by creating a low pressure in the energy storage (4), and to transfer the released carbon dioxide gas from the energy storage (4) back to the heat reaction chamber (3).

9. Device according to any of claims 1 to 6, wherein the heat reaction chamber (3) is fluidly connected with the energy storage (4) via a compressor (16), wherein the compressor (16) is configured to move the released carbon dioxide gas from the heat reaction chamber (3) to the energy storage (4), such that the carbon dioxide gas is stored in a pressurized state in the energy storage (4).

10. Device according to any of claims 1 to 7, wherein the energy storage (4) is fluidly connected with the heat reaction chamber (3) via a valve (7), wherein the valve (7) is configured to control release pressure of the carbon dioxide gas flowing into the heat reaction chamber (3) from the energy storage (4).

11. System for storing renewable electric energy (20), comprising an electric energy storage device (1) according to any of claims 1 to 10, and a renewable energy source (21).

12. System according to claim 11, wherein the renewable electric energy source (21) is a photovoltaic power plant or a wind power plant.

13. Method for storing electric energy, comprising the steps of:
- producing electric energy with a renewable electric energy source,
- heating a heat reaction chamber of an energy storage device comprising a metal carbonate material and a susceptor material with an electromagnetic field generated and transmitted by a metal coil embedded in the heat reaction chamber with the electric energy, such that a carbon dioxide gas is released from the metal carbonate material, leaving a metal oxide material in the heat reaction chamber,
- transferring the released carbon dioxide gas from the heat reaction chamber to an energy storage,
- storing the released carbon dioxide gas in the energy storage for a time interval,
- releasing the stored carbon dioxide gas from the energy storage,
- returning the released carbon dioxide gas from the energy storage to the heat reaction chamber ,
- converting the stored carbon dioxide gas to heat in the heat reaction chamber by carbon dioxide gas reaction with the metal oxide material,
- heating a heat exchanger with heat from the heat reaction chamber, where the heat exchanger is connected to an external system.

14. Method according to claim 13, wherein the released carbon dioxide gas from the heat reaction chamber is transferred to the energy storage through a valve.

15. Method according to claim 13 or claim 14, wherein the released carbon dioxide gas from the energy storage is returned to the heat reaction chamber through a valve by controlled pressure change of the energy storage.

16. Method according to any of claims 13 to 15, wherein the released carbon dioxide gas is stored in a pressurized gas tank.

17. Method according to any of claims 13 to 15, wherein the released carbon dioxide gas is stored in a porous solid material.

## Patentansprüche

1. Vorrichtung (1) zur Speicherung elektrischer Energie, umfassend eine Wärmereaktionskammer (3), einen Energiespeicher (4) und einen Wärmetauscher (12), der dazu geeignet ist, durch die Wärmereaktionskammer (3) erhitzt zu werden, wobei die Wärmereaktionskammer (3) ein mit einem Suszeptormaterial gemischtes Metallkarbonat und eine Metallspule (5) umfasst, wobei der Energiespeicher (4) einen Druckgastank oder ein poröses Festmaterial umfasst, und wobei ein Ventil (7) zwischen der Wärmereaktionskammer (3) und dem Energiespeicher (4) angeordnet ist, wobei die Vorrichtung eine mit der Metallspule (5) verbundene Wechselstromquelle (8) umfasst, die dazu geeignet ist, einen Wechselstrom an die Metallspule (5) auszugeben, **dadurch gekennzeichnet, dass** die Metallspule (5), die als Antenne fungiert, dazu geeignet ist, ein elektromagnetisches Feld zu erzeugen und an das Suszeptormaterial in der Wärmereaktionskammer (3) zu übertragen, sodass das Metallkarbonat erhitzt wird, um ein Kohlendioxidgas freizusetzen.

2. Vorrichtung nach Anspruch 1, wobei die Wärmereaktionskammer (3) dazu geeignet ist, eine Temperatur zwischen 800 und 900 Grad Celsius zu halten, wenn die Wärmereaktionskammer (3) durch das elektromagnetische Feld erhitzt wird.

3. Vorrichtung nach einem der Ansprüche 1 bis 2, wobei das Metallkarbonat CaCO₃ ist.

4. Vorrichtung nach einem der Ansprüche 1 bis 3, wobei das Suszeptormaterial in der Wärmereaktionskammer (3) Co, Ni, Fe, SiC oder C oder eine Kombination davon umfasst.

5. Vorrichtung nach einem der Ansprüche 1 bis 4, wobei das poröse Festmaterial in dem Energiespeicher (4) Aktivkohle, Zeolith oder ein metallorganisches Gerüst umfasst.

6. Vorrichtung nach einem der Ansprüche 1 bis 5, wobei die Metallspule (5) hohl und dazu geeignet ist, eine Wärmeträgerflüssigkeit zu leiten.

7. Vorrichtung nach einem der Ansprüche 1 bis 6, wobei die Wärmereaktionskammer (3) über ein Ventil (7) mit dem Energiespeicher (4) fluidverbunden ist, wobei das Ventil (7) dazu ausgelegt ist, den Fluss des freigesetzten Gases aus der Wärmereaktionskammer (3) zu dem Energiespeicher (4) zu steuern.

8. Vorrichtung nach einem der Ansprüche 1 bis 7, wobei der Energiespeicher (4) über einen Kompressor oder eine Vakuumpumpe (17) mit der Wärmereaktionskammer (3) fluidverbunden ist, wobei der Kompressor oder die Vakuumpumpe (17) dazu ausgelegt ist, die Freisetzung von in dem porösen Material in dem Energiespeicher (4) gespeichertem Kohlendioxidgas durch Erzeugen eines Unterdrucks in dem Energiespeicher (4) zu bewirken und das freigesetzte Kohlendioxidgas aus dem Energiespeicher (4) zurück in die Wärmereaktionskammer (3) zu übertragen.

9. Vorrichtung nach einem der Ansprüche 1 bis 6, wobei die Wärmereaktionskammer (3) über einen Kompressor (16) mit dem Energiespeicher (4) fluidverbunden ist, wobei der Kompressor (16) dazu ausgelegt ist, das freigesetzte Kohlendioxidgas aus der Wärmereaktionskammer (3) zu dem Energiespeicher (4) zu bewegen, sodass das Kohlendioxidgas in einem Druckzustand in dem Energiespeicher (4) gespeichert wird.

10. Vorrichtung nach einem der Ansprüche 1 bis 7, wobei der Energiespeicher (4) über ein Ventil (7) mit der Wärmereaktionskammer (3) fluidverbunden ist, wobei das Ventil (7) dazu ausgelegt ist, den Freisetzungsdruck des in die Wärmereaktionskammer (3) strömenden Kohlendioxidgases aus dem Energiespeicher (4) zu steuern.

11. System zur Speicherung erneuerbarer elektrischer Energie (20), umfassend eine Vorrichtung (1) zur Speicherung elektrischer Energie nach einem der Ansprüche 1 bis 10 und eine Quelle (21) erneuerbarer Energie.

12. System nach Anspruch 11, wobei die Quelle (21) erneuerbarer elektrischer Energie ein Photovoltaikkraftwerk oder ein Windkraftwerk ist.

13. Verfahren zum Speichern elektrischer Energie, umfassend die Schritte:
- Erzeugen elektrischer Energie mit einer Quelle erneuerbarer elektrischer Energie,
- Erhitzen einer Wärmereaktionskammer einer Energiespeichervorrichtung, die ein Metallkarbonatmaterial und ein Suszeptormaterial umfasst, mit einem elektromagnetischen Feld, das durch eine in der Wärmereaktionskammer eingebettete Metallspule unter Verwendung der elektrischen Energie erzeugt und übertragen wird, sodass ein Kohlendioxidgas aus dem Metallkarbonatmaterial freigesetzt wird und ein Metalloxidmaterial in der Wärmereaktionskammer verbleibt,
- Übertragen des freigesetzten Kohlendioxidgases aus der Wärmereaktionskammer zu einem Energiespeicher,
- Speichern des freigesetzten Kohlendioxidgases in dem Energiespeicher für ein Zeitintervall,
- Freisetzen des gespeicherten Kohlendioxidgases aus dem Energiespeicher,
- Zurückführen des freigesetzten Kohlendioxidgases aus dem Energiespeicher in die Wärmereaktionskammer,
- Umwandeln des gespeicherten Kohlendioxidgases in Wärme in der Wärmereaktionskammer durch Reaktion des Kohlendioxidgases mit dem Metalloxidmaterial,
- Erhitzen eines Wärmetauschers mit Wärme aus der Wärmereaktionskammer, wobei der Wärmetauscher mit einem externen System verbunden ist.

14. Verfahren nach Anspruch 13, wobei das freigesetzte Kohlendioxidgas aus der Wärmereaktionskammer über ein Ventil zu dem Energiespeicher übertragen wird.

15. Verfahren nach Anspruch 13 oder Anspruch 14, wobei das freigesetzte Kohlendioxidgas aus dem Energiespeicher durch eine gesteuerte Druckänderung des Energiespeichers über ein Ventil in die Wärmereaktionskammer zurückgeführt wird.

16. Verfahren nach einem der Ansprüche 13 bis 15, wobei das freigesetzte Kohlendioxidgas in einem Druckgastank gespeichert wird.

17. Verfahren nach einem der Ansprüche 13 bis 15, wobei das freigesetzte Kohlendioxidgas in einem porösen Festmaterial gespeichert wird.

## Revendications

1. Dispositif (1) de stockage d'énergie électrique, comprenant une chambre de réaction thermique (3), un stockage d'énergie (4) et un échangeur de chaleur (12) adapté pour être chauffé par la chambre de réaction thermique (3), dans lequel la chambre de réaction thermique (3) comprend un carbonate métallique mélangé à un matériau suscepteur et une bobine métallique (5), dans lequel le stockage d'énergie (4) comprend un réservoir de gaz sous pression ou un matériau solide poreux, et dans lequel une vanne (7) est agencée entre la chambre de réaction thermique (3) et le stockage d'énergie (4), dans lequel le dispositif comprend une source de courant alternatif (8) reliée à la bobine métallique (5) et adaptée pour délivrer en sortie un courant alternatif à la bobine métallique (5), **caractérisé en ce que** la bobine métallique (5) agissant comme une antenne est adaptée pour générer et transmettre un champ électromagnétique au matériau suscepteur dans la chambre de réaction thermique (3), de sorte que le carbonate métallique est chauffé pour libérer un gaz de dioxyde de carbone.

2. Dispositif selon la revendication 1, dans lequel la chambre de réaction thermique (3) est adaptée pour maintenir une température comprise entre 800 et 900 degrés Celsius lorsque la chambre de réaction thermique (3) est chauffée par le champ électromagnétique.

3. Dispositif selon l'une quelconque des revendications 1 à 2, dans lequel le carbonate métallique est du CaCO₃.

4. Dispositif selon l'une quelconque des revendications 1 à 3, dans lequel le matériau suscepteur dans la chambre de réaction thermique (3) comprend du Co, du Ni, du Fe, du SiC ou du C ou une combinaison de ceux-ci.

5. Dispositif selon l'une quelconque des revendications 1 à 4, dans lequel le matériau solide poreux dans le stockage d'énergie (4) comprend du charbon actif, de la zéolite ou une structure métallo-organique.

6. Dispositif selon l'une quelconque des revendications 1 à 5, dans lequel la bobine métallique (5) est creuse et adaptée pour transporter un fluide caloporteur.

7. Dispositif selon l'une quelconque des revendications 1 à 6, dans lequel la chambre de réaction thermique (3) est raccordée fluidiquement au stockage d'énergie (4) par l'intermédiaire d'une vanne (7), dans lequel la vanne (7) est configurée pour réguler l'écoulement de gaz libéré de la chambre de réaction thermique (3) vers le stockage d'énergie (4).

8. Dispositif selon l'une quelconque des revendications 1 à 7, dans lequel le stockage d'énergie (4) est raccordé fluidiquement à la chambre de réaction thermique (3) par l'intermédiaire d'un compresseur ou d'une pompe à vide (17), dans lequel le compresseur est configuré ou la pompe à vide (17) est configurée pour provoquer la libération de gaz de dioxyde de carbone stocké dans le matériau poreux dans le stockage d'énergie (4) en créant une basse pression dans le stockage d'énergie (4), et pour retransférer le gaz de dioxyde de carbone libéré du stockage d'énergie (4) vers la chambre de réaction thermique (3).

9. Dispositif selon l'une quelconque des revendications 1 à 6, dans lequel la chambre de réaction thermique (3) est raccordée fluidiquement au stockage d'énergie (4) par l'intermédiaire d'un compresseur (16), dans lequel le compresseur (16) est configuré pour déplacer le gaz de dioxyde de carbone libéré de la chambre de réaction thermique (3) vers le stockage d'énergie (4), de sorte que le gaz de dioxyde de carbone est stocké dans un état sous pression dans le stockage d'énergie (4).

10. Dispositif selon l'une quelconque des revendications 1 à 7, dans lequel le stockage d'énergie (4) est raccordé fluidiquement à la chambre de réaction thermique (3) par l'intermédiaire d'une vanne (7), dans lequel la vanne (7) est configurée pour réguler la pression de libération du gaz de dioxyde de carbone s'écoulant dans la chambre de réaction thermique (3) depuis le stockage d'énergie (4).

11. Système de stockage d'énergie électrique renouvelable (20), comprenant un dispositif de stockage d'énergie électrique (1) selon l'une quelconque des revendications 1 à 10, et une source d'énergie renouvelable (21).

12. Système selon la revendication 11, dans lequel la source d'énergie électrique renouvelable (21) est une centrale photovoltaïque ou une centrale éolienne.

13. Procédé de stockage d'énergie électrique, comprenant les étapes de :
- la production d'énergie électrique avec une source d'énergie électrique renouvelable,
- le chauffage d'une chambre de réaction thermique d'un dispositif de stockage d'énergie comprenant un matériau de carbonate métallique et un matériau suscepteur avec un champ électromagnétique généré et transmis par une bobine métallique intégrée dans la chambre de réaction thermique avec l'énergie électrique, de sorte qu'un gaz de dioxyde de carbone est libéré du matériau de carbonate métallique, laissant un matériau d'oxyde métallique dans la chambre de réaction thermique,
- le transfert du gaz de dioxyde de carbone libéré de la chambre de réaction thermique vers un stockage d'énergie,
- le stockage du gaz de dioxyde de carbone libéré dans le stockage d'énergie pendant un intervalle de temps,
- la libération du gaz de dioxyde de carbone stocké à partir du stockage d'énergie,
- le retour du gaz de dioxyde de carbone libéré du stockage d'énergie vers la chambre de réaction thermique,
- la conversion du gaz de dioxyde de carbone stocké en chaleur dans la chambre de réaction thermique par réaction du gaz de dioxyde de carbone avec le matériau d'oxyde métallique,
- le chauffage d'un échangeur de chaleur avec la chaleur provenant de la chambre de réaction thermique, dans lequel l'échangeur de chaleur est raccordé à un système externe.

14. Procédé selon la revendication 13, dans lequel le gaz de dioxyde de carbone libéré de la chambre de réaction thermique est transféré vers le stockage d'énergie à travers une vanne.

15. Procédé selon la revendication 13 ou la revendication 14, dans lequel le gaz de dioxyde de carbone libéré du stockage d'énergie est renvoyé vers la chambre de réaction thermique à travers une vanne par un changement de pression régulé du stockage d'énergie.

16. Procédé selon l'une quelconque des revendications 13 à 15, dans lequel le gaz de dioxyde de carbone libéré est stocké dans un réservoir de gaz sous pression.

17. Procédé selon l'une quelconque des revendications 13 à 15, dans lequel le gaz de dioxyde de carbone libéré est stocké dans un matériau solide poreux.
